# EUROPEAN PATENT SPECIFICATION

(11) **EP 1 276 292 B1**
(45) Date of publication and mention of the grant of the patent: **03.01.2018**
(21) Application number: 01306083.5
(22) Date of filing: 13.07.2001
(51) Int. Cl.: H04L 29/06, G06F 17/30

(54) **FILE TRANSFER PROTOCOL**
DATEIÜBERTRAGUNGSPROTOKOLL
PROTOCOLE DE TRANSFERT DE FICHIERS

(43) Date of publication of application: 15.01.2003
(73) Proprietor: Hewlett-Packard Development Company, L.P., Houston, TX 77070 (US)
(72) Inventor: Gonzalez, Manuel, Hewlet Packard Espanola SA, Barcelona 08190 (ES); Chiarabini, Luca, Hewlet Packard Espanola SA, Barcelona 08190 (ES)
(74) Representative: Zimmermann, Tankred Klaus

(56) References cited:
- EP-A- 0 836 145
- WO-A-98/43177
- WO-A-99/35593
- "chapter1; chapter 27" In: Richard W Stevens: "TCP/IP Illustrated: the protocols.", 1994, Addison-Wesley Publishing Company, Reading, US ISBN: 0-201-63346-9

## Description

### Field of the Invention

The present invention relates to the field of computer networks, and particularly, although not exclusively, to transfer of files between individual computers within a network of computers.

### Background to the Invention

The internet, as is well known in the art, comprises a plurality of computers, interlinked by a plurality of communications links, such as telephone links, wide area network links, copper cable, fibreoptic cable and the like, operating according to the internet protocol (IP). With the advent of widespread usage of the internet for business applications, there is frequent movement of information between computers. Such information is transferred as data in business to business (b2b), business to consumer (b2c), and peer to peer interactions involving the sending of text files, data files, image data files, music data files e.g. MPEG files, WAV files, MP3 format files and the like.

Transfer of files between computers conventionally uses storage of files on local hard disc drives of computer entities. For example using the known Napster® service, MP3 files are shared between several users, where each user has a computer, e.g. personal computer, loaded with an application software enabling searching for and transfer of music files in MP3 format. The files are transferred between computers, and stored on the local hard discs of each computer.

The closest prior art is "TCP/IP Illustrated: the protocols", R.W.Stevens, Addison-Wesley, Reading, US, 1984, ISBN 0-201-63346-9, that describes the File Transfer Protocol.

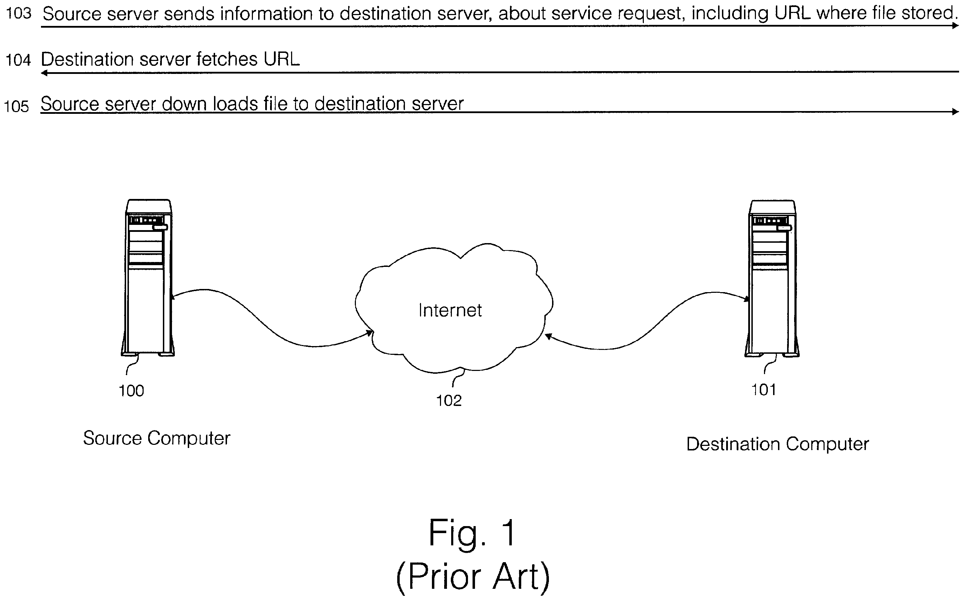

Referring to Fig. 1 herein, there is illustrated schematically a prior art method of movement of information in the form of data files between first and second server computers over the internet. In order to move a file between a source computer 100 and destination computer 101, over the internet 102 in step P720..spec 103, the source computer sends information about a service request to the destination computer, including a URL where a data file can be found on the source computer. In step 104, the destination computer requests the URL from the source computer 100. In step 105, the source computer 100 sends the file to the destination computer 101, which downloads the file from the internet. Using the known HTTP protocol, a complete data file is transferred over the internet between a data storage device on the source computer 100 where the file is located, to an area of memory on the destination server 101, where the file is to be stored. Since, in the general case, the data file can be an MP3 music file, an image data file e.g. MPEG, or a text file, files of various sizes, from kilobytes to tens of megabytes are transferred conventionally using this method.

In general, for networked data transfer operations, where several computer entities are involved in the movement of files, the computers and the communication links between them must provide a correct level of service in terms of:
- Secure communication channels between computers
- Adequate rate of information delivery between computers
- Adequate data storage capacity at each computer

To provide secure communications channels, prior art systems may include security protocols, such as the known secure sockets layer (SSL), as well as encryption techniques.

Achieving adequate throughput of information delivery is a problem in prior art internet connected computers, because typically the bit rate capacity of known internet connections are generally insufficient to provide substantially instantaneous data transfer of files. High download times for files are a major problem on the internet. Private networks may provide high bit rate capacity, alleviating the problem. However, such bit rate capacity is generally high cost, and for an operator of an internet service, obtaining adequate transmission capacity may be beyond that operators control.

A common known solution to the problem of insufficient storage capacity at computer entities connected over the internet is to increase the storage capacity of computers by adding new storage devices to a computer. However, this solution has the problem of cost, and delay in adding hardware. In order to download a data file of a size larger than would fit onto a computer's existing data storage capacity requires addition of hardware, which may take one or two days to implement, thereby incurring a significant delay in transfer of data files.

Since the transmission bit rate capacity requirement and the data storage requirement on an internet computer increase relatively as file size increases, and since there is an increasing trend towards larger file sizes being transferred over the internet, for the foreseeable future, there will remain a problem that download of files onto an internet enabled computer is subjected to there being enough available data storage capacity on the hard disk drive of such a computer.

Where several computer entities are co-operating to provide an e-commerce service, where some computers act as intermediaries for other computers, failure to download data files from one computer to another, may prohibit efficient e-commerce services.

### Summary of the Invention

Specific implementations according to the present invention aim to provide a method of operation of a computer entity involved at an intermediate stage in the transfer of a data file between a source computer entity and a destination computer entity, wherein the intermediate computer entity facilitates passage of a data file between the source and destination computer entities, under conditions where the intermediate computer entity does not have enough available data storage space to store the whole data file at once.

Specific implementations of the present invention aim to facilitate file transfer by an intermediate computer entity between a source computer entity and a destination computer entity without breach of security protocols, and within bandwidth requirements dictated by input and output links to and from the intermediate computer entity.

Where a data storage device of a computer entity involved in the movement of a data file has insufficient available data storage capacity to store a complete data file, specific methods according to the present invention may enable transfer of the data file through that computer entity in file portions, each file portion having a lower byte quantity than a byte quantity of the full data file to be transferred, and without breaching basic security layer protocols or bandwidth limitations of a communications channel between a source computer entity and a destination computer entity.

According to a first aspect of the present invention there is provided a method of transferring data between a plurality of computer entities communicating via a plurality of communications links, said plurality of computer entities comprising a source computer entity, a destination computer entity, and at least one intermediate computer entity, wherein a data file is transferred between said source computer entity and said destination computer entity via said intermediate computer entity, said method comprising the steps of:
(i) storing said data file in a non volatile data storage device comprising said source computer;
(ii) sending a request for file transfer from said destination computer to said at least one intermediate computer, said request for file transfer requesting transfer of said data file from said source computer to said destination computer via said at least one intermediate computer;
(iii) said intermediate computer requesting transfer of a portion of said data file from said source computer entity to said intermediate computer;
(iv) transferring said data file portion from said source computer to said intermediate computer;
(v) sending said data file portion from said intermediate computer to said destination computer.

According to a second aspect of the present invention there is provided a method of operating a computer entity for transfer of a data file, said method comprising the steps of:
receiving a service request data, said service request data specifying a location of said data file;
sending a request for a portion of said data file, said data file portion being of a bit quantity less than a bit quantity of said complete data file;
receiving said file portion;
storing said file portion in a volatile memory device of said computer entity;
storing said file portion in a volatile memory area of said computer entity; and
sending said file portion via an output port of said computer entity.

According to a third aspect of the present invention there is provided a method of operating an intermediate computer entity for transfer of a complete data file from a preceding computer entity to a succeeding computer entity over a communications link, said method comprising the steps:
(a) requesting transfer of a portion of said data file, said data file portion having a bit quantity less than a bit quantity of said complete data file;
(b) receiving said data file portion;
(c) storing said data file portion in an internal volatile memory device of said intermediate computer;
(d) sending said data file portion via an output port of said intermediate computer entity; and
(e) repeating steps (a) to (d) until said complete data file is transferred from said preceding computer entity to said succeeding computer entity.

According to a fourth aspect of the present invention there is provided a network of computer entities, each said computer entity comprising:
at least one data processor;
a non volatile data storage device;
a volatile data storage device;
a communications port capable of inputting and outputting a data file;
said network comprising:
   at least one source computer, capable of storing a data file on a said non volatile data storage device of said source computer;
   at least one intermediate computer entity, said intermediate computer entity capable of receiving said data file, applying a data processing function to said data file; and
   at least one destination computer entity, said destination computer entity capable of receiving said data file and storing said data file in a non volatile data storage device of said destination computer entity;
   wherein said network of computers operates to:
      divide said data file into a plurality of data file portions;
      send each data file portion across said network between said computer entities;
      apply at least one data processing function to said file portion; and
      accumulate a plurality of said file portions in a non volatile data storage device of at least one of said intermediate computer and/or said destination computer, to recreate said data file in non volatile data storage device.

### Brief Description of the Drawings

For a better understanding of the invention and to show how the same may be carried into effect, there will now be described by way of example only, specific embodiments, methods and processes according to the present invention with reference to the accompanying drawings in which:
Fig. 1 illustrates schematically file transfer between first and second computers over the internet, where a file stored on a data storage device of a first computer is transferred over the internet and stored on a data storage device of a second computer, as is known in the prior art;
Fig. 2 illustrates schematically a plurality of computers communicating over the internet, where a file is transferred between a source computer and one or more destination computers via an intermediate computer according to a first mode of operation;
Fig. 3 illustrates schematically a format of a service request transferred between computer entities as shown in Fig. 2;
Fig. 4 illustrates schematically components of a computer entity according to a specific implementation of the present invention, capable of implementing transfers of data files by handling portions of a data file of a size less than a full size of the data file;
Fig. 5 illustrates schematically a logical view of a plurality of computer entities co-operating in a chain to provide a service, where a data file is transferred from computer to computer within the chain;
Fig. 6 illustrates schematically three computers co-operating to process a data file, where the data file is transferred between the three computers, according to a specific method of the present invention;
Fig. 7 illustrates schematically processing and data storage components of the three computers of Fig. 6;

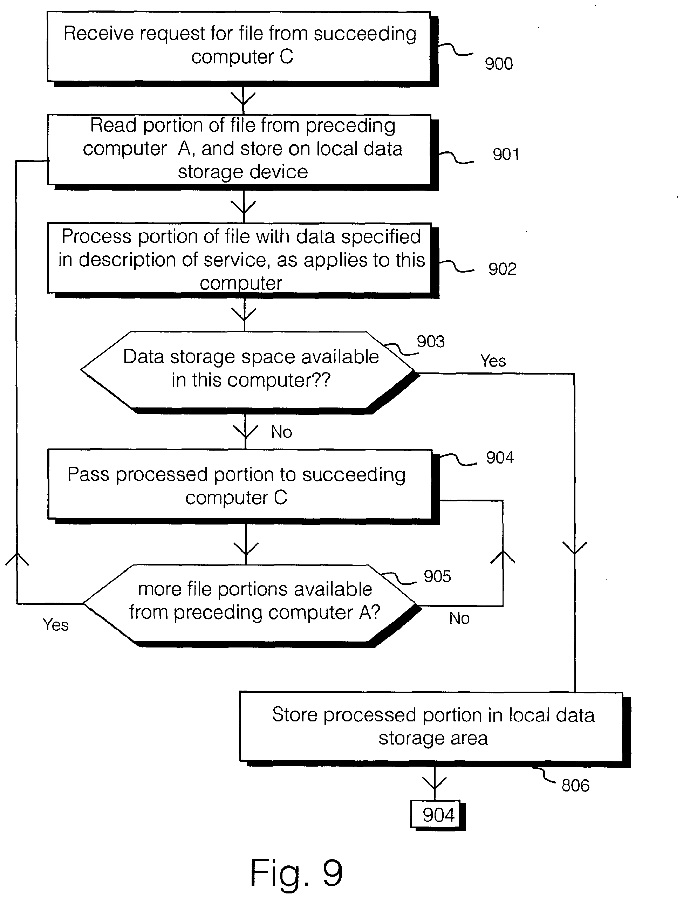

Figs. 8 and 9 illustrates schematically a mode of operation of a computer according to a specific method of the present invention for transferring a file between a source computer and a destination computer in a chain of a plurality of computer entities; and
Fig. 10 illustrates schematically operation of the three computers of Fig. 6, co-operating in a chain to process a data file.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

In the presently described implementation, specific features are described in the context of an online printing service for the provision of print services such as posters, or image data files from which posters can be printed. Provision of such services involves a plurality of computer entities interconnected by a network, e.g. the internet, where data files having relatively high data content are transferred between server computers over the network. An image data file may have several data processing operations carried out on it, where each data processing operation may be carried out by a different computer entity, prior to final delivery of the image data to a destination computer at which the image data is converted into a physical printed poster.

However, it will be understood by the skilled addressee that whilst the invention is described in a best mode implementation in relation to a printing service, in other implementations, the invention may be put into effect for other applications and in environments, for other types of data, e.g. video data, audio data, text data, image data, or the lik, and that the scope of the invention is limited only by the scope of the claims recited herein.

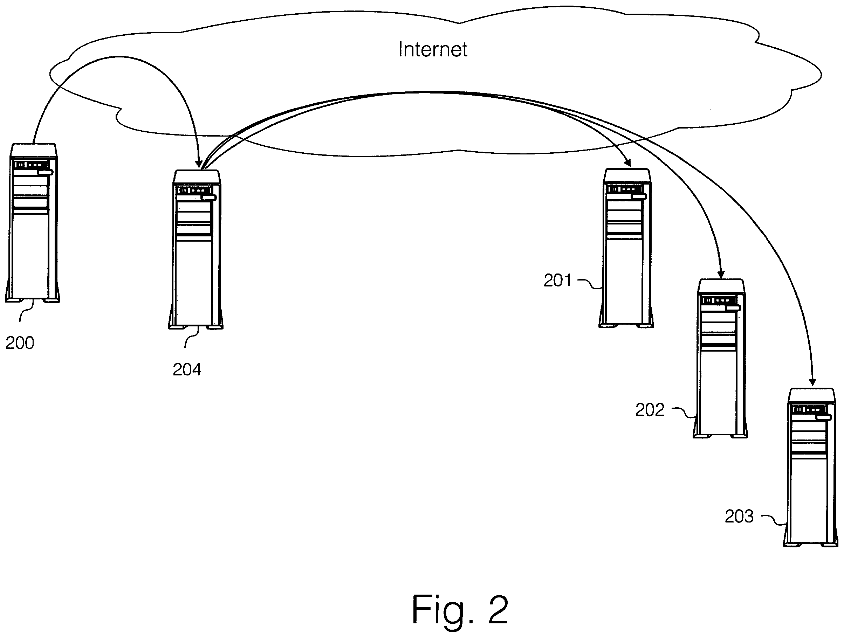

Referring to Fig. 2 herein, there is illustrated schematically a plurality of computers arranged to co-operate to provide an e-commernce supply chain. Transfer of a data file from a source server computer 200 to a plurality of destination server computers 201-203 via an intermediate internet server computer 204. In practice, each of the server computers 200-204 may be owned or controlled by different enterprises, and file transfers between individual computers may be controlled by passage of command instructions between computers.

In the system of Fig. 2, transmission of files can occur according to a first mode of operation as follows:

A data file and an associated processing description file is sent from the source computer 200 to the intermediate computer 204, and then from the intermediate computer one or more of the destination computers 201-203. Each of the destination computers 201-203 may apply data processing to the data file. The computer 204 may also apply some data processing.

In each case, the data file and its associated processing description file is stored on the local hard disk drive of the computer to which it is sent. For example, a data file may be transferred from the source computer 200 to the intermediate computer 204 and stored on the local hard disk drive of the intermediate computer 204.

In a print service provider implementation, source computer 200 may be a portal computer operating a website, which retails posters to online customers, and which also stores image content in the form of image data files, which are owned by the company operating the source computer. The intermediate computer 204 may handle provision of printing services to the source computer 200, and have functionality for quoting a price for printing an image, and also for selecting a print service provider computer for fulfillment of a poster printing order. Destination computers 201-203 may be operated by print service providers, and perform the function of fulfilling a poster print order by printing image data onto a poster, including any special processing required of that image

A data file and an associated processing description file is sent from the source computer 200 to the intermediate computer 204, and then from the intermediate computer one or more of the destination computers 201-203. Each of the destination computers 201-203 may apply data processing to the data file. The computer 204 may also apply some data processing.

In each case, the data file and its associated processing description file is stored on the local hard disk drive of the computer to which it is sent. For example, a data file may be transferred from the source computer 200 to the intermediate computer 204 and stored on the local hard disk drive of the intermediate computer 204.

In a print service provider implementation, source computer 200 may be a portal computer operating a website, which retails posters to online customers, and which also stores image content in the form of image data files, which are owned by the company operating the source computer. The intermediate computer 204 may handle provision of printing services to the source computer 200, and have functionality for quoting a price for printing an image, and also for selecting a print service provider computer for fulfillment of a poster printing order. Destination computers 201-203 may be operated by print service providers, and perform the function of fulfilling a poster print order by printing image data onto a poster, including any special processing required of that image data, for example selecting different types of print material, applying tone modification to the printed image, or any other special printing requirements. The processing destination computers 201-203 may also apply some data.

Whilst the source computer 200 owns a data file which is to be further processed by one or more of destination computers 201-203, for example to generate a poster from an image file, the intermediate computer 204 acts as an intermediary for determining which destination computer to send the file to and invention defined hereinafter by the claims is not limited to any particular type of data content in the data file. In the case of an image data file 301, the processing header may comprise a description of the processing to be done on the image data file, for example a paper size of a poster to be printed from the image data. The data processing operations specified by the service description data in the processing header may be cumulative, that is there may be more than one data processing operation specified for the payload data, and those data processing operations may be specified to be carried out by more than one different computer entity.

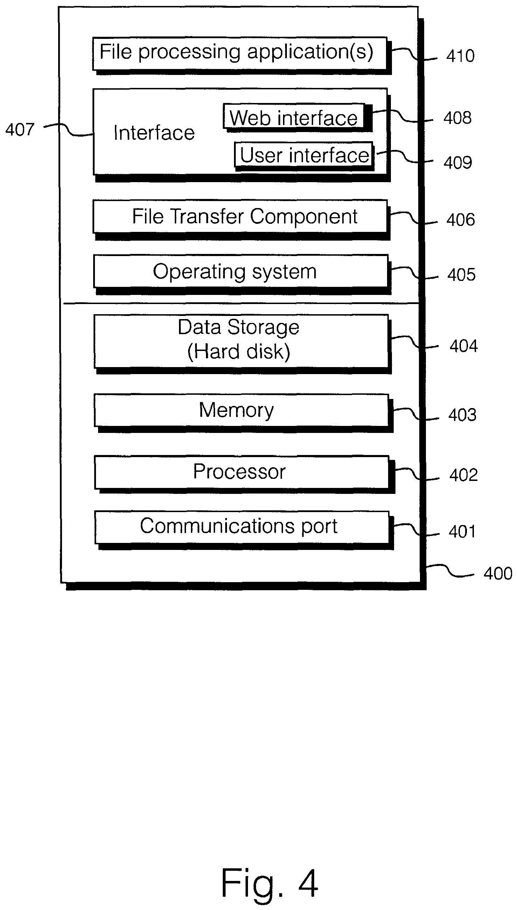

Referring to Fig. 4 herein, there is illustrated schematically components of one example of a server computer shown in Fig. 2 herein. The server computer comprises one or a plurality of communications ports 401, for communicating over the internet or via a wide area network with one or a plurality of other computer entities; a processor 402 as is well known in the art, for example an Intel® processor; a volatile memory 403 as is well known in the art; a data storage device 404, for example a RAID array, single hard disk, or the like as is well known in the art; a file transfer component 406 for effecting transfer of ffiles into and out of the computer, according to specific methods of the present invention, an interface 407, which may include a web interface 408, and/or a user interface 409, for example having a visual display monitor, a keyboard and pointing device e.g. a mouse, and capable of presenting a desktop view e.g. a Windows® desktop, a Unix®, or a Linux® desktop as is known in the art; and one or more file processing components 410 for carrying out processing operations on the data payload of a file. In the case of a printing service implementation, such file processing operations may include a print application, an encryption and/or decryption application, but in the general case can include any application which forms a processing function on a data file, which is necessary or useful either for file transfer between computer entities over a network, or which is useful as a service. Other examples of file processing applications include but are not limited to, an MP3 application for receiving an MP3 file and burning this onto a compact disk recording medium or the like.

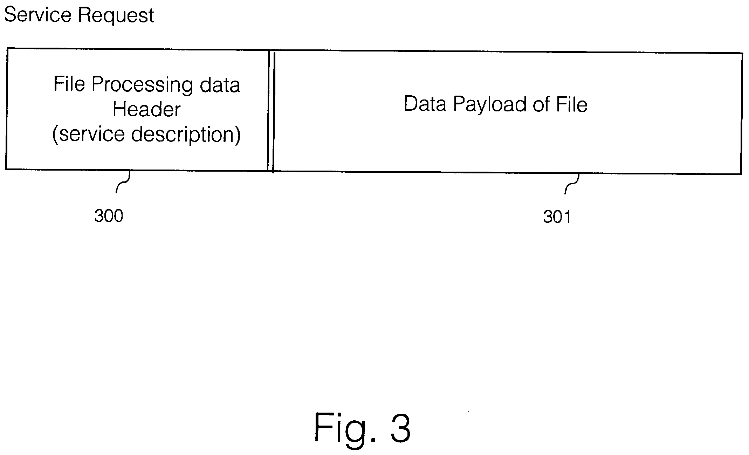

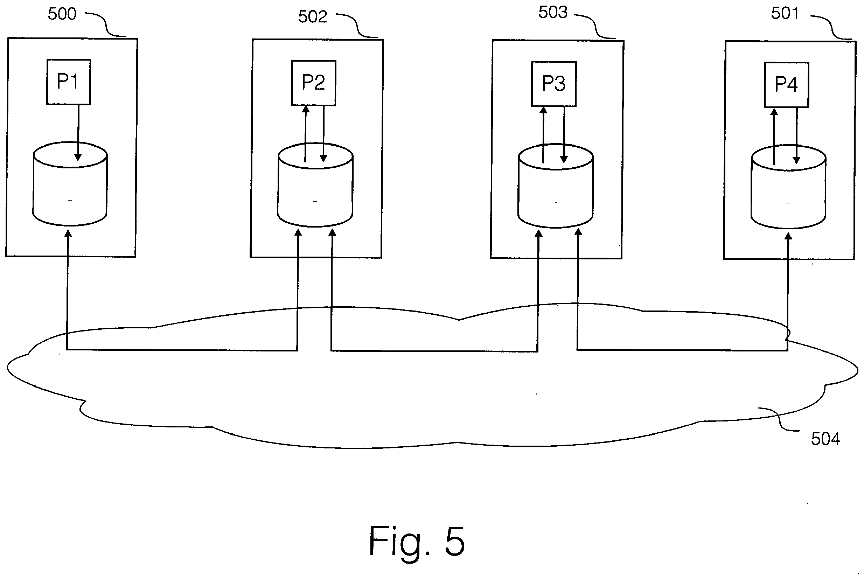

Referring to Fig. 5 herein, there is illustrated schematically in logical view, a plurality of computer entities in a network co-operating to process a data file originating at a source computer entity 500, and arriving at a destination computer entity 501, via first and second intermediate computer entities 502, 503 respectively. Each computer entity as described with reference to Fig. 4 herein, has a hard disk data storage device, and a data processing application which applies a process P1-P4 respectively to the file. Transfer of the service request as shown in Fig. 3 between computer entities is via the internet 504, or a wide area network.

For transfer of the file between computer entities, there are various options to solve the problem illustrated with reference to Fig. 2 as follows:
Firstly, the service request comprising the data file payload and its associated file processing header 300 containing a description of processing to be applied to the file, may travel from a source computer 500 to a physical data storage device on first intermediate computer 502 where it is stored. A first data processing operation *P1* may be applied to the file by an application on the source computer 500. A second data processing function *P2* is applied by an application resident on the first intermediate computer 502, and the *(P1* + *P2)* processed file may be stored on the local hard drive of the first intermediate computer 502, before being sent to the second intermediate computer 503. On arriving at the second intermediate computer 503, the processed file *file (P1* + P2) may be stored on the local hard disk of the second intermediate computer, and then a third processing function *P3* applied to the file, resulting in a processed file *file (P1* + *P2* + *P3)* which is stored on the local hard drive of the second intermediate computer 503. The processed file may then be sent to the destination computer 501 and stored on the local hard disk drive of that computer, prior to having a fourth processing function *P4* applied, resulting in a processed file *file (P1* + *P2* + *P3* + *P4).*

On visiting each computer entity, the file is stored on the local hard disk drive of that computer entity, and processing of the file by a processing function may occur as specified in the processing header 300.

However, for each computer entity, if the hard disk drive data storage device of that computer entity runs out of available space, an error raised, and the service of transfer of the file and processing *P1* + *P2* + *P3* + *P4* is not completed. The more computer entities and processing in the route which the file takes, the greater the possibility of errors occurring due to insufficient available hard disk drive space on a computer entity.

A second, alternative, method of handling and processing the file is as follows.

Only the description of the service to be provided travels from one computer entity to another (the file processing data header 300) over the network. When the last computer entity in the chain (the destination computer entity 501) receives the service description, it extracts the file processing instructions about how to get the file, that is, the URL of the file, and then proceeds to obtain that file directly from the source computer entity 500 where the file is stored. Therefore, whilst the service description traverses all computer entities in the chain, thereby allowing e-commerce functionality to be achieved, the payload data itself only traverses from the source computer entity 500 directly to the destination computer entity 501 in one movement. Provided there is enough available data storage space on the destination computer to receive the payload data, then the risk of failure to transfer the file is avoided, because the intermediate computers are avoided by the high data content data file 301.

However, by avoiding the intermediate computers this introduces the further problem that the processing functions *P2, P3* provided by those intermediate computers are not carried out. For example, in Fig. 5 first intermediate server 502 could provide the processing function of scaling up an image file, and second intermediate computer 503 could perform the function of encrypting the scaled up image file. One possible solution to this further problem is to provide the data processing functions *P2, P3* onto the destination computer 501, so that the destination computer does all file processing operations *P2, P3, P4.* However, this introduces a third problem that all processing software must be loaded onto all computer entities which are likely to be used as destination computer entities. It may not be possible to install certain processing software items on all computers, due to legal problems or security problems. For example, if first and second intermediate servers 502, 503 belong to a different company to a company owning the destination computer 501, there may be commercial or legal problems in loading the software to perform file processing functions *P2* and *P3* onto the destination server 501.

Further, if the destination computer 501 is to be loaded with all file processing software, this increases the hardware requirement of that computer entity, since the functions *P2, P3* may demand special hardware requirements in order to operate.

Additionally, the complexity of the maintenance of the processing software expands, because the processing software must be installed on all computers acting as end points. Therefore, when upgrades are released, the upgrades must be propagated to all destination computers, to ensure compatability, which increases the burden of maintenance.

A third option, subject of the best mode implementation is as follows:

According to the best mode implementation of the present invention, a data file can be transferred between source and destination computer entities via one or more intermediate computer entities, wherein each computer entity may, optionally, provide processing to the file data, and wherein each computer entity may operate with an available local data storage space which is insufficient to contain the whole of the pre-processed or post-processed data file. The configurable amount of available data storage space on each computer entity may be smaller than the full size of the file.

One advantage of the methods disclosed herein is that a file being transferred is not stored at the same time in more than two computers in a chain of number N computers, thereby saving file storage and enhancing data security, since the possibility of accessing the entire file is reduced. Only at the end of the transmission procedure will the file reside in two computers, the source computer and the target computer.

A data file resident at a source computer is transferred to a destination computer via one or a plurality of intermediate computers, by sending the data file as a series of portions, where each portion has a data content less than the size of the full file. Each data portion, as it passes between intermediate computers, may be stored locally on the data storage device of the computer, enabling the computer to handle that file portion even though the available data storage space on the computer is not large to store the full data file at once. The data file is transmitted from the source computer via the one or more intermediate computers, only when the data file is requested by a destination computer, being the ultimate destination of the file. The destination computer requests the data file only when it has sufficient available data storage capacity to store the full file, in its original form as stored on the source computer, or in a processed form after processing by the one or more intermediate computers, and after applying any processing functions to that file which are carried out on the destination computer itself. Prior to sending the data file as a series of portions from the source computer to the destination computer via the intermediate computers, a service request data is sent from the source computer to a first intermediate computer in a chain, which specifies a service description, being a description of data processing services to be applied to the data file. Each computer entity may optionally provide a data processing function to the data file. For example, in the case of an image data, such data processing may include image reversal, modification of tones, sizing of the image data, addition of text within an image data or other data processing functions. Such individual data processing functions may be applied by individual computer entities within a chain of computer entities. Receipt of the service description by the destination computer and each intermediate computer within a chain between the source and destination computers allows each intermediate computer to prepare itself for receipt of the data file in portions, and prepare itself for application of data processing functions specified to be applied by that computer to the file, as the data file passes between the source and destination computer entities as a series of file portions.

At the destination computer processed file portions are received, and the full data file is reconstituted by storing the plurality of received processed file portions in a data storage device of the destination computer entity as a single file. If any intermediate computer entity has enough available space to hold more than one file portion, then the data storage devices of that intermediate computer entity may act as a temporary cache, where portions of the file are accumulated, partially reconstituting the file. If an intermediate computer entity has enough available data storage space to contain the whole file, then the whole file may be reconstituted within that data storage area of an intermediate computer entity, prior to transfer to other intermediate computer entities, and ultimately to the destination computer.

Because the file is transferred as a series of file portions, each of a smaller data size than a data size of the file itself, then the file can be transferred between a source and destination computer, over fixed, limited bit rate capacity communications links, whilst maintaining security, and maintaining all data processing functions of the file data to be carried out by intermediate computer entities between the source computer and destination computer. Transfer of files is optimized, since transfer of the file as a series of portions is enabled under conditions where transfer of a full file as one data block would be prohibited due to lack of data storage space available on each intermediate computer.

Further details of algorithms and components required to affect the best mode implementation are now described.

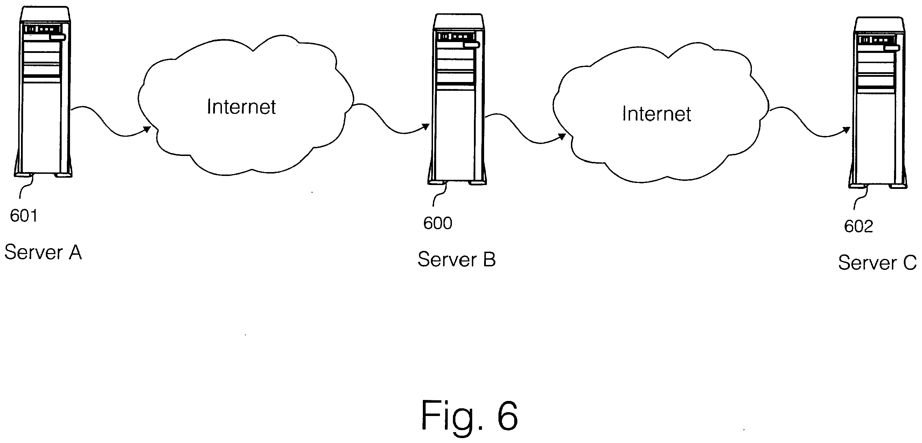

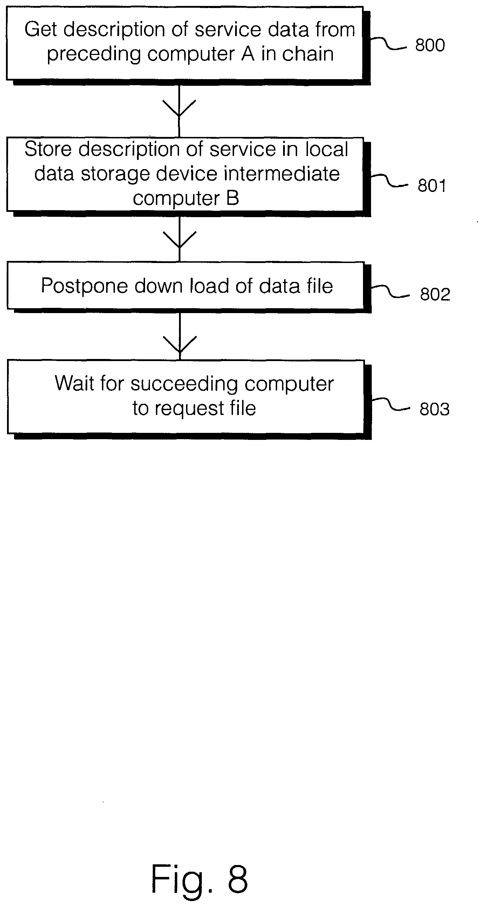

Referring to Figs. 6 to 8 herein, there is illustrated schematically process steps carried out by an intermediate computer (server B) 600 between a preceding computer (server A) and a succeeding computer (server C) 602, where the preceding, intermediate and succeeding computers are connected via a network e.g. the internet.

In step 800, the intermediate computer 600 obtains a description of service data from the preceding computer A (601) in the chain. That is, the intermediate computer receives a description of any data processing to be carried out on a file by the intermediate computer 600. At this stage, the intermediate computer does not obtain the data file from the preceding computer 601, but stores a description of the service, in a local data storage device of the intermediate computer 600 in step 801. Download of a data file from the preceding computer 601 to the succeeding computer 602 is postponed (step 802). The intermediate computer 600 proceeds to wait for a request from the succeeding computer 602 or a final destination computer for download of the file in step 803.

Once the succeeding computer 602 issues a request for the file, addressed to the intermediate computer 600, which is received by the intermediate computer 600 in step 900, then the intermediate computer, in step 901 reads a portion of the data file from the preceding computer 601. The file location in the preceding computer 601 is given by the service description part of the service request received by the intermediate computer 600. The intermediate computer downloads a portion of the file, which is small enough to fit into the available data storage area on the intermediate computer. The available local data storage area may be an amount of memory area on the memory device 407, e.g. RAM or a motherboard of the computer, or may also include an amount of hard disk data storage space as well. The portion of the file obtained from the preceding computer 601 comprises a chunk of the full data file, which has a lesser number of bytes than the full data file. Step 902, the file portion is processed by data processing applications resident on the intermediate computer, according to any instructions contained in the service description, which are capable of being carried out by the intermediate computer entity, depending upon which data processing functions the intermediate computer entity is capable of carrying out. In step 903, it is checked whether there is enough available data storage space on the intermediate computer to store the processed file portion. If there is not enough available data storage space, then the processed file portion is sent to the succeeding computer 602. In step 905, the intermediate computer checks whether any more file portions are available from the preceding computer 601. If there are, then steps 901-905 are repeated until the whole of the file has been read, one portion at a time from the preceding computer 600.

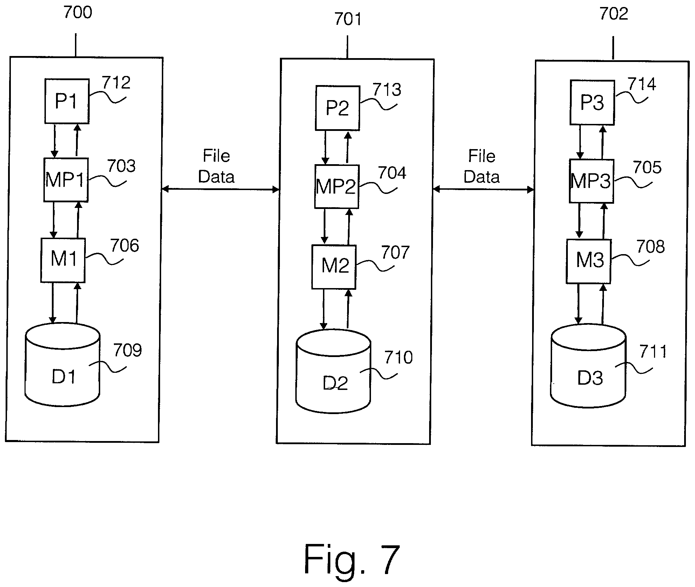

Referring to Fig. 7 herein, there is illustrated schematically data flow of file portions between source, intermediate and destination computers 700-702 respectively. Each computer comprises a micro processor 703-705 respectively, a volatile memory device 706-708 respectively, a data storage device, e.g. RAID or hard disk device 709-711 respectively and one or more data processing components 712-714 respectively. Other components are as illustrated in Fig. 4 herein, which are not shown in Fig. 7 for the purpose of clarity.

Transfer of individual portions of the file, stored on the data storage device 709 of the source computer 700 are transferred along the chain of computers, depending upon the available data storage area of the intermediate computer 701. The data storage area of the intermediate computer 701 includes the local volatile memory area 707, as well as any available space on the hard disk drive data storage device 710. If no available data storage area is present on the hard disk drive 710, then transfer of portions can still occur, using the local volatile memory area 707 in the intermediate computer, and without storing locally any processed file data or pre-processed file data portion on the local hard disk drive 710. The size of the portion is limited by the amount of available data storage area on the intermediate computer. In a chain of computers having more than one intermediate computer, at any time, the feature which limits the rate of data transfer along the whole chain is the rate at which the computer entity having the least amount of available data storage area can process portions of the file. The size of file portion may be different for each computer entity within the chain and is determined by the data storage available on a particular computer entity. For example, where an intermediate computer entity has no available hard disk data storage area, but has a small amount of memory area available, data can be processed in a portion size where the portion fits into the available amount of memory area. Therefore, a portion size could be as small as one byte of data. Under these circumstances, since the immediate computer cannot store the byte of data locally on its local hard disk drive 710, it must pass the byte of data along to the next computer in the chain. In a chain containing a plurality of intermediate computer entities the rate of data transfer at different points along the chain may be different, since some intermediate computer entities may be storing locally file portions within their hard drive data storage device, whilst other intermediate computer entities, having very little available data storage space may be processing data in small portion sizes, and passing them onto a succeeding computer entity in the chain without storing that portion in the local hard disk drive of that intermediate computer.

If in step 903, there is enough data storage space available on the intermediate computer to store the processed file portion, and one or more other file portions, then optionally, the processed file portion is stored locally on the local data storage device with the intermediate computer. The stored processed file portion may be subsequently merged with other processed file portions of the same file, in order to re-constitute or partially re-constitute the processed file on the data storage device of the intermediate computer, subject to availability of data storage space. The merged processed file portions are subsequently read by the succeeding computer 602 in step 904. Any available data storage capacity on the intermediate computer may be used as a cache for consolidation of file portions, prior to transfer to the succeeding computer 602.

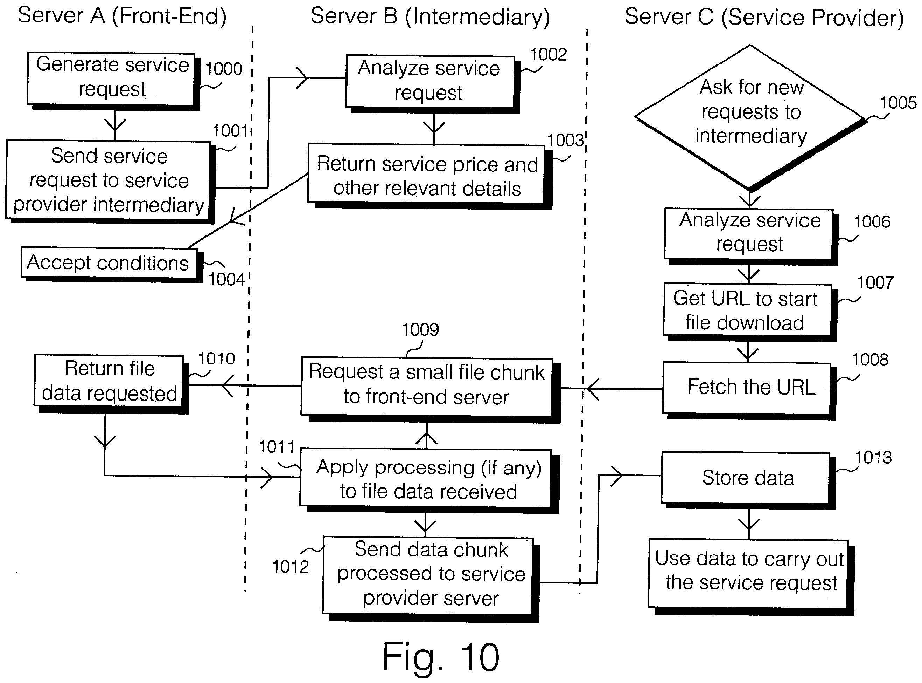

Referring to Fig. 10 herein, there is illustrated schematically process steps carried out by each of the three computers of Fig. 6, for fulfillment of a service request, requesting fulfillment of a service, involving data processing applied by intermediate computer 600.

In step 1000 source computer 601 generates a service request message, and in step 1001 sends the service request to a selected intermediary computer 600, selected to fulfill a service specified in the service request message. Transmission of the service request message is made over the communications network, as is known in the art. On receipt of the service request, in step 1002 the intermediate computer 600 analyses the service request, by applying data processing according to a service request processing application stored on the intermediary computer 600. The intermediary computer determines whether it can fulfill that service, which may involve selecting one or more destination computers to fulfill the service request, determining a price of a service, handling delivery details and other delivery and fulfillment data. In step 1003, the intermediary computer sends data describing a set of terms and conditions back to the source computer 601 over the communications network, which are accepted by the source computer 601 in step 1004.

The intermediary computer 600 passes the service request to a selected destination computer 602, which is selected as a service provider to provide the service specified in the service request. The intermediate computer 600 may negotiate a cost, delivery time and other details specifying the service with the selected destination computer 602.

In step 1005 the destination computer 602 asks the intermediary computer 600 for the service request, and having received it, in step 1006 analyses that request. In step 1007 the destination computer 602 obtains the URL of the data file to be processed, the URL being contained within the service request. In step 1008, the destination computer proceeds to fetch the data file from the URL specified in the service request, via the intermediate computer 600. The data file is stored on the source computer 601, but transfer of the data file from the source computer 601 to the destination computer 602 occurs via the intermediate computer 600, since the intermediate computer 600 applies a data processing step to the data file substantially in real time as it transfers from the source computer 601 to the destination computer 602 in a series of data portions, each data portion having a number of bytes, less than the number of bytes of the full data file. The size of the data portions transferred from the source computer 601 via the intermediate computer 600 is less than the available amount of non volatile data storage on the intermediate computer 600, thereby allowing the intermediate computer 600 to apply data processing functionality to the data portions as they pass through that computer, without needing to store those data portions in its non volatile data storage device. In processes 1009-1012, the intermediate computer requests (1009) a file portion from the source computer 601, which returns the file portion as requested (1010) to the intermediate computer 600. On receiving the file portion, the intermediate computer applies any processing to that file portion as specified in the service request (1011) and proceeds to forward the processed data portion to the destination computer 1012, which is received by the destination computer and stored on the non volatile data storage device of the destination computer in process 1013.

The processes 1009-1012 repeat, serially obtaining and processing individual file portions comprising the data file, until all file portions comprising the data file have been processed by the intermediate computer and sent to the destination computer for storage in process 1013. In step 1014, the destination computer 602 uses the processed data file to implement the service request.

The intermediate computer may or may not apply data processing to the file portions, according to whether any data processing is specified by the service request. The size of each consecutive file portion may vary from file portion to file portion, but in all cases is less than an available non volatile data storage area present on the intermediate computer 600, but within a size of available volatile memory area of the intermediate computer 600, thereby allowing the data file to be stored temporarily in non volatile random access memory (RAM) on a motherboard of the intermediate computer 600, whilst a data processor of the intermediate computer 600 carries out data processing on the file portion. Typically, file portion sizes can range from one byte, up to a few kilobytes in size.

Specific implementations according to the present invention may provide a method for moving a file across a set of co-operating computer entities connected by a network, whilst avoiding the problem of individual computer entities having insufficient available data storage space to store the whole of the data file causing cessation of the movement of the file, and thereby allow the file to visit such computer entities, enabling processing of the file by those computer entities, even where that computer entity has insufficient available space to store the whole of the data file in either pre-processed or post processed form.

Whilst a specific implementation has been described herein, which involves processing of a file at intermediate computers, the invention is not restricted to apply processing to a data file at an intermediate computer. The scope of the invention is defined solely by the claims herein.

## Claims

1. A method of transferring data between a plurality of computer entities communicating via a plurality of communications links, said plurality of computer entities comprising a source computer entity (200), a destination computer entity (201 - 203), and at least one intermediate computer entity (204), wherein a data file is transferred between said source computer entity (200) and said destination computer entity (201 - 203) via said intermediate computer entity (204), said method comprising the steps of:
(i) storing said data file in a non volatile data storage device comprising said source computer (200);
(ii) sending a request for file transfer from said destination computer (201 - 203) to said at least one intermediate computer (204), said request for file transfer requesting transfer of said data file from said source computer (200) to said destination computer (201 - 203) via said at least one intermediate computer (204);
(iii) said intermediate computer (204) requesting transfer of a portion of said data file from said source computer entity (200) to said intermediate computer (204);
(iv) transferring said data file portion and an associated file processing header (300) containing a description of processing to be applied to the file portion from said source computer (200) to said intermediate computer (204);
(v) sending said data file portion from said intermediate computer (204) to said destination computer (201 - 203), the method further comprising the steps of:
repeating steps (iv) to (v) to transfer a plurality of said file portions between said source computer (200) and said destination computer (201 - 203) via said intermediate computer (204), until all of said data file is transferred from said source computer (200) to said destination computer (201 - 203),
wherein said intermediate computer (204) applies data processing as specified in the processing header (300) to said file portion prior to sending said file portion to said destination computer (201 - 203).

2. The method as claimed in claim 1, comprising repeating the steps (iv) to (v),
wherein each of a plurality of said file portions, are sized according to a byte size determined by said intermediate computer (204).

3. The method as claimed in any one of claims 1 to 2, wherein said intermediate computer (204) receives a said file portion, and forwards said file portion to said destination computer (201 - 203), without storing said file portion on a local non volatile data storage device of said computer.

4. The method as claimed in claim 1, wherein if said intermediate computer (204) has an available non volatile data storage space large enough to store at least said file portion, then said intermediate computer (204) operates to:
store said file portion in said non volatile data storage device;
repeat steps (iv) to (v) to obtain a further file portion at said computer entity; and
store said further file portion in said non volatile data storage device along with said initial file portion.

5. The method as claimed in any one of the preceding claims, comprising:
storing said file portion in a volatile memory of said intermediate computer entity (204);
applying a data processing function to said file portion; and
storing a processed said file portion in said volatile data storage device.

6. A method of operating an intermediate computer entity (204) for transfer of a complete data file from a preceding computer entity (200) to a succeeding computer entity (201 - 203) over a communications link, said method comprising the steps:
(a) requesting transfer of a portion of said data file, said data file portion having a bit quantity less than a bit quantity of said complete data file;
(b) receiving said data file portion and an associated file processing header (300) containing a description of processing to be applied to the file portion;
(c) storing said data file portion in an internal volatile memory device of said intermediate computer (204);
(d) sending said data file portion via an output port of said intermediate computer entity (204); and
(e) repeating steps (a) to (d) until said complete data file is transferred from said preceding computer entity (200) to said succeeding computer entity (201 - 203),
wherein said intermediate computer (204) applies data processing as specified in the processing header (300) to said file portion prior to sending said file portion to said succeeding computer entity (201 - 203).

7. The method as claimed in claim 6, further comprising the step of:
storing said processed said file portion in said volatile memory area of said intermediate computer entity (204).

8. A network of computer entities, each said computer entity comprising:
at least one data processor;
a non volatile data storage device;
a volatile data storage device;
a communications port capable of inputting and outputting a data file;
said network comprising:
at least one source computer (200), capable of storing a data file on a said non volatile data storage device of said source computer (200);
at least one intermediate computer entity (204), said intermediate computer entity (204) capable of receiving said data file, applying a data processing function to said data file; and
at least one destination computer entity (201 - 203), said destination computer entity (201 - 203) capable of receiving said data file and storing said data file in a non volatile data storage device of said destination computer entity (201 - 203);
wherein said network of computers operates to:
divide said data file into a plurality of data file portions;
send each data file portion across said network between said computer entities;
apply at least one data processing function to said file portion; and
accumulate a plurality of said file portions in a non volatile data storage device of at least one of said intermediate computer (204) and/or said destination computer (201 - 203), to recreate said data file in non volatile data storage device,
wherein said intermediate computer (204) is configured to receive said file portion and an associated file processing header (300) containing a description of processing to be applied to the file portion and to apply data processing as specified in the processing header (300) to said file portion prior to sending said file portion to said destination computer (201 - 203).

9. The system of claim 8, wherein a said computer entity comprises a data processing component for applying a data processing function to said data file, wherein said data processing function is applied by processing each of a plurality of said file portions serially.

## Patentansprüche

1. Verfahren zum Übertragen von Daten zwischen mehreren Computerentitäten, die über mehrere Kommunikationsverbindungen kommunizieren, wobei die mehreren Computerentitäten eine Quellcomputerentität (200), eine Zielcomputerentität (201-203) und wenigstens eine Zwischencomputerentität (204) umfassen, wobei eine Datendatei zwischen der Quellcomputerentität (200) und der Zielcomputerentität (201-203) über die Zwischencomputerentität (204) übertragen wird, wobei das Verfahren die folgenden Schritte umfasst:
(i) Speichern der Datendatei in einem nicht flüchtigen Datenspeichergerät, den Quellcomputer (200) umfassend;
(ii) Senden einer Anforderung zur Dateiübertragung von dem Zielcomputer (201-203) zu dem wenigstens einen Zwischencomputer (204), wobei die Anforderung zur Dateiübertragung eine Übertragung der Datendatei von dem Quellcomputer (200) zu dem Zielcomputer (201-203) über den wenigstens einen Zwischencomputer (204) anfordert;
(iii) Anfordern, durch den Zwischencomputer (204), einer Übertragung eines Teils der Datendatei von der Quellcomputerentität (200) zum Zwischencomputer (204);
(iv) Übertragen des Datendateiteils und eines zugeordneten Dateiverarbeitungsheaders (300), der eine auf den Dateiteil anzuwendende Verarbeitungsbeschreibung enthält, von dem Quellcomputer (200) auf den Zwischencomputer (204);
(v) Senden des Datendateiteils von dem Zwischencomputer (204) zum Zielcomputer (201-203), wobei das Verfahren ferner die folgenden Schritte umfasst:
Wiederholen der Schritte (iv) bis (v) zum Übertragen von mehreren der Dateiteile zwischen dem Quellcomputer (200) und dem Zielcomputer (201-203) über den Zwischencomputer (204), bis die gesamte Datendatei von dem Quellcomputer (200) zum Zielcomputer (201-203) übertragen worden ist,
wobei der Zwischencomputer (204) vor dem Senden des Dateiteils an den Zielcomputer (201-203) ein Datenverarbeiten wie im Verarbeitungsheader (300) bestimmt auf den Dateiteil anwendet.

2. Verfahren nach Anspruch 1, umfassend ein Wiederholen der Schritte (iv) bis (v), wobei jeder aus mehreren der Dateiteile gemäß einer durch den Zwischencomputer (204) bestimmten Bytegröße bemessen ist.

3. Verfahren nach einem der Ansprüche 1 bis 2, wobei der Zwischencomputer (204) einen Dateiteil empfängt und den Dateiteil an den Zielcomputer (201-203) weiterleitet, ohne den Dateiteil auf einem lokalen nicht flüchtigen Datenspeichergerät des Computers zu speichern.

4. Verfahren nach Anspruch 1, wobei, wenn der Zwischencomputer (204) einen verfügbaren nicht flüchtigen Datenspeicherplatz aufweist, der groß genug ist, wenigstens den Dateiteil zu speichern, dann der Zwischencomputer (204) betrieben wird zum:
Speichern des Dateiteils in dem nicht flüchtigen Datenspeichergerät;
Wiederholen der Schritte (iv) bis (v) zum Erhalten eines weiteren Dateiteils an der Computerentität; und
Speichern des weiteren Dateiteils in dem nicht flüchtigen Datenspeichergerät gemeinsam mit dem Anfangsdateiteil.

5. Verfahren nach einem der vorhergehenden Ansprüche, Folgendes umfassend:
Speichern des Dateiteils in einem flüchtigen Speicher der Zwischencomputerentität (204);
Anwenden einer Datenverarbeitungsfunktion auf den Dateiteil; und
Speichern eines verarbeiteten Dateiteils in dem flüchtigen Datenspeichergerät.

6. Verfahren zum Betreiben einer Zwischencomputerentität (204) zum Übertragen einer vollständigen Datendatei von einer vorhergehenden Computerentität (200) auf eine nachfolgende Computerentität (201-203) über eine Kommunikationsverbindung, wobei das Verfahren die folgenden Schritte umfasst:
(a) Anfordern einer Übertragung eines Teils der Datendatei, wobei der Datendateiteil eine Bitmenge aufweist, die kleiner ist als eine Bitmenge der vollständigen Datendatei;
(b) Empfangen des Datendateiteils und eines zugeordneten Dateiverarbeitungsheaders (300), der eine auf den Dateiteil anzuwendende Verarbeitungsbeschreibung enthält;
(c) Speichern des Datendateiteils in einem internen flüchtigen Speichergerät des Zwischencomputers (204);
(d) Senden des Datendateiteils über einen Ausgabeanschluss der Zwischencomputerentität (204); und
(e) Wiederholen der Schritte (a) bis (d), bis die vollständige Datendatei von der vorhergehenden Computerentität (200) zur nachfolgenden Computerentität (201-203) übertragen worden ist,
wobei der Zwischencomputer (204) vor dem Senden des Dateiteils an die nachfolgende Computerentität (201-203) ein Datenverarbeiten wie im Verarbeitungsheader (300) bestimmt auf den Dateiteil anwendet.

7. Verfahren nach Anspruch 6, ferner den folgenden Schritt umfassend:
Speichern des verarbeiteten Dateiteils in dem flüchtigen Speicherbereich der Zwischencomputerentität (204).

8. Netzwerk aus Computerentitäten, wobei jede Computerentität Folgendes umfasst:
wenigstens einen Datenprozessor;
ein nicht flüchtiges Datenspeichergerät;
ein flüchtiges Datenspeichergerät;
einen Kommunikationsanschluss, der zum Eingeben und Ausgeben einer Datendatei in der Lage ist;
wobei das Netzwerk Folgendes umfasst:
wenigstens einen Quellcomputer (200), der in der Lage ist, eine Datendatei auf einem nicht flüchtigen Datenspeichergerät des Quellcomputers (200) zu speichern;
wenigstens eine Zwischencomputerentität (204), wobei die Zwischencomputerentität (204) in der Lage ist, die Datendatei zu empfangen und eine Datenverarbeitungsfunktion auf die Datendatei anzuwenden;
und
wenigstens eine Zielcomputerentität (201-203), wobei die Zielcomputerentität (201-203) in der Lage ist, die Datendatei zu empfangen und die Datendatei in einem nicht flüchtigen Datenspeichergerät der Zielcomputerentität (201-203) zu speichern;
wobei das Netzwerk aus Computern betrieben wird zum:
Teilen der Datendatei in mehrere Datendateiteile;
Senden jedes Datendateiteils über das Netzwerk zwischen den Computerentitäten;
Anwenden wenigstens einer Datenverarbeitungsfunktion auf den Dateiteil; und
Ansammeln mehrerer der Dateiteile in einem nicht flüchtigen Datenspeichergerät des Zwischencomputers (204) und/oder des Zielcamputers (201-203), um die Datendatei in einem nicht flüchtigen Datenspeichergerät wiederherzustellen,
wobei der Zwischencomputer (204) konfiguriert ist, den Dateiteil und einen zugeordneten Dateiverarbeitungsheader (300), der eine auf den Dateiteil anzuwendende Verarbeitungsbeschreibung enthält, zu empfangen und vor dem Senden des Dateiteils an den Zielcomputer (201-203) ein Datenverarbeiten wie im Verarbeitungsheader (300) bestimmt auf den Dateiteil anzuwenden.

9. System nach Anspruch 8, wobei die Computerentität eine Datenverarbeitungskomponente zum Anwenden einer Datenverarbeitungsfunktion auf die Datendatei enthält, wobei die Datenverarbeitungsfunktion durch serielles Verarbeiten jedes von mehreren der Datenteile angewendet wird.

## Revendications

1. Procédé de transfert de données entre une pluralité d'entités informatiques communiquant par l'intermédiaire d'une pluralité de liaisons de communication, ladite pluralité d'entités informatiques comprenant une entité informatique source (200), une entité informatique de destination (201 - 203) et au moins une entité informatique intermédiaire (204), dans lequel un fichier de données est transféré entre ladite entité informatique source (200) et ladite entité informatique de destination (201 - 203) par l'intermédiaire de ladite entité informatique intermédiaire (204), ledit procédé comprenant les étapes suivantes :
(i) le stockage dudit fichier de données dans un dispositif de stockage de données non volatiles comprenant ledit ordinateur source (200) ;
(ii) l'envoi d'une demande de transfert de fichier dudit ordinateur de destination (201 - 203) audit au moins un ordinateur intermédiaire (204), ladite demande de transfert de fichier demandant le transfert dudit fichier de données dudit ordinateur source (200) audit ordinateur de destination (201 - 203) par l'intermédiaire dudit au moins un ordinateur intermédiaire (204) ;
(iii) la demande par ledit ordinateur intermédiaire (204) de transfert d'une partie dudit fichier de données de ladite entité informatique source (200) audit ordinateur intermédiaire (204) ;
(iv) le transfert de ladite partie de fichier de données et d'un en-tête de traitement de fichier associé (300) comportant une description du traitement à appliquer à la partie de fichier dudit ordinateur source (200) audit ordinateur intermédiaire (204) ;
(v) l'envoi de ladite partie de fichier de données dudit ordinateur intermédiaire (204) audit ordinateur de destination (201 - 203), le procédé comprenant en outre les étapes suivantes :
la répétition des étapes (iv) à (v) en vue de transférer une pluralité desdites parties de fichier entre ledit ordinateur source (200) et ledit ordinateur de destination (201 - 203) par l'intermédiaire dudit ordinateur intermédiaire (204), jusqu'à ce que l'ensemble dudit fichier de données soit transféré dudit ordinateur source (200) audit ordinateur de destination (201 - 203),
dans lequel ledit ordinateur intermédiaire (204) applique un traitement de données tel que spécifié dans l'en-tête de traitement (300) à ladite partie de fichier avant d'envoyer ladite partie de fichier audit ordinateur de destination (201 - 203).

2. Procédé selon la revendication 1, comprenant la répétition des étapes (iv) à (v), dans lequel chacune d'une pluralité desdites parties de fichier est dimensionnée en fonction d' une taille d' octet déterminée par ledit ordinateur intermédiaire (204).

3. Procédé selon l'une quelconque des revendications 1 ou 2, dans lequel ledit ordinateur intermédiaire (204) reçoit une dite partie de fichier, et transmet ladite partie de fichier audit ordinateur de destination (201 - 203), sans stocker ladite partie de fichier sur un dispositif de stockage de données non volatiles local dudit ordinateur.

4. Procédé selon la revendication 1, dans lequel si ledit ordinateur intermédiaire (204) a un espace de stockage de données non volatiles disponible suffisamment grand en vue de stocker au moins ladite partie de fichier, alors ledit ordinateur intermédiaire (204) fonctionne en vue de :
stocker ladite partie de fichier dans ledit dispositif de stockage de données non volatiles ;
répéter les étapes (iv) à (v) en vue d'obtenir une autre partie de fichier au niveau de ladite entité informatique ; et
stocker ladite autre partie de fichier dans ledit dispositif de stockage de données non volatiles avec ladite partie de fichier initiale.

5. Procédé selon l'une quelconque des revendications précédentes, comprenant :
le stockage de ladite partie de fichier dans une mémoire volatile de ladite entité informatique intermédiaire (204) ;
l'application d'une fonction de traitement de données à ladite partie de fichier ; et
le stockage d'une dite partie de fichier traitée dans ledit dispositif de stockage de données volatiles.

6. Procédé d'exploitation d'une entité informatique intermédiaire (204) pour le transfert d'un fichier de données complet d'une entité informatique précédente (200) à une entité informatique suivante (201 - 203) sur une liaison de communication, ledit procédé comprenant les étapes suivantes :
(a) la demande de transfert d'une partie dudit fichier de données, ladite partie de fichier de données ayant une quantité de bits inférieure à une quantité de bits dudit fichier de données complet ;
(b) la réception de ladite partie de fichier de données et d'un en-tête de traitement de fichier associé (300) comportant une description du traitement à appliquer à la partie de fichier ;
(c) le stockage de ladite partie de fichier de données dans un dispositif de mémoire volatile interne dudit ordinateur intermédiaire (204) ;
(d) l'envoi de ladite partie de fichier de données par l'intermédiaire d'un port de sortie de ladite entité informatique intermédiaire (204) ; et
(e) la répétition des étapes (a) à (d) jusqu'à ce que ledit fichier de données complet soit transféré de ladite entité informatique précédente (200) à ladite entité informatique suivante (201 - 203),
dans lequel ledit ordinateur intermédiaire (204) applique un traitement de données tel que spécifié dans l'en-tête de traitement (300) à ladite partie de fichier avant d'envoyer ladite partie de fichier à ladite entité informatique suivante (201 - 203).

7. Procédé selon la revendication 6, comprenant en outre l'étape de :
stockage de ladite partie de fichier traitée dans ladite zone de mémoire volatile de ladite entité informatique intermédiaire (204).

8. Réseau d'entités informatiques, chacune desdites entités informatiques comprenant :
au moins un processeur de données ;
un dispositif de stockage de données non volatiles ;
un dispositif de stockage de données volatiles ;
un port de communication apte à entrer et à sortir un fichier de données ;
ledit réseau comprenant :
au moins un ordinateur source (200), apte à stocker un fichier de données sur undit dispositif de stockage de données non volatiles dudit ordinateur source (200) ;
au moins une entité informatique intermédiaire (204), ladite entité informatique intermédiaire (204) apte à recevoir ledit fichier de données, appliquant une fonction de traitement de données audit fichier de données ; et
au moins une entité informatique de destination. (201 - 203), ladite entité informatique de destination (201 - 203) étant apte à recevoir ledit fichier de données et à stocker ledit fichier de données dans un dispositif de stockage de données non volatiles de ladite entité informatique de destination (201 - 203) ;
dans lequel ledit réseau d'ordinateurs fonctionne en vue :
de diviser ledit fichier de données en une pluralité de parties de fichier de données ;
d'envoyer chaque partie de fichier de données sur ledit réseau entre lesdits entités informatiques ;
d'appliquer au moins une fonction de traitement de données à ladite partie de fichier ; et
d'accumuler une pluralité desdites parties de fichier dans un dispositif de stockage de données non volatiles d'au moins l'un dudit ordinateur intermédiaire (204) et/ou dudit ordinateur de destination (201 - 203), en vue de recréer ledit fichier de données dans un dispositif de stockage de données non volatiles,
dans lequel ledit ordinateur intermédiaire (204) est conçu pour recevoir ladite partie de fichier et un en-tête de traitement de fichier associé (300) comportant une description du traitement à appliquer à la partie de fichier et pour appliquer un traitement de données tel que spécifié dans l'en-tête de traitement (300) à ladite partie de fichier avant d'envoyer ladite partie de fichier audit ordinateur de destination (201 - 203).

9. Système selon la revendication 8, dans lequel une dite entité informatique comprend un composant de traitement de données pour appliquer une fonction de traitement de données audit fichier de données, dans lequel ladite fonction de traitement de données est appliquée en traitant successivement chacune d'une pluralité desdites parties de fichier.
